Europäisches Patentamt

European Patent Office

Office européen des brevets

(19)

(11) Veröffentlichungsnummer: **0 030 711**
**B1**

(12) EUROPÄISCHE PATENTSCHRIFT

(45) Veröffentlichungstag der Patentschrift:
**14.03.84**

(21) Anmeldenummer: **80107788.4**

(22) Anmeldetag: **11.12.80**

(51) Int. Cl.³: **B 60 D 1/14**

(54) Haltegestänge zum stufenlosen Feststellen der Höhe von Zuggabeln an Anhängern.

(30) Priorität: **13.12.79 DE 2950119**

(43) Veröffentlichungstag der Anmeldung:
**24.06.81 Patentblatt 81/25**

(45) Bekanntmachung des Hinweises auf die Patenterteilung:
**14.03.84 Patentblatt 84/11**

(84) Benannte Vertragsstaaten:
**AT FR GB IT**

(56) Entgegenhaltungen:
**DE - A - 1 630 219**
**DE - B - 1 215 005**
**DE - C - 2 161 580**
**DE - U - 1 637 007**
**DE - U - 7 530 678**
**US - A - 3 053 552**

(73) Patentinhaber: **Graubremse GmbH, Eppelheimer Strasse 76, D-6900 Heidelberg (DE)**

(72) Erfinder: **Berger, Eugen, Siedlung 27, D-8403 Peising (DE)**
Erfinder: **Hiss, Reimund,**
**Kurt-Schuhmacher-Strasse 11a, D-8400 Regensburg (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

## Haltegestänge zum stufenlosen Feststellen der Höhe von Zuggabeln an Anhängern

Die Erfindung bezieht sich auf ein Haltegestänge der im Oberbegriff des Anspruchs 1 genannten Art, wie es beispielsweise aus dem DE-U-1 637 007 bekannt ist. Als Reibglied wird dabei ein geschlitzter konischer Ring eingesetzt, der das eine Verbindungselement umfaßt und zwischen einem Verstellkörper und dem anderen Verbindungselement derart fest- bzw. eingeklemmt werden kann, daß die Teile des Rings radial mit einer Reibfläche an dem einen Verbindungselement angreifen. Der Verstellkörper ist zwar vorteilhaft von außen zugänglich, jedoch ist eine Einstellung der Reibkraft nur in begrenztem Umfange und nicht feinfühlig genug möglich, weil die Teile des geschlitzten konischen Rings offenbar aus Metall bestehen und daher nicht federnde nachgiebig zusammengedrückt werden können.

Aus der DE-C3-2 161 580 ist ein ähnliches Haltegestänge zum stufenlosen Verstellen und Feststellen der Höhe von Zuggabeln an Anhängern bekannt, bei dem das Reibglied aus Elastomer-Werkstoff selbstfedernd nachgiebig ausgebildet und auf der Kolbenstange, also dem inneren Verbindungselement, gelagert ist. Der Verstellkörper ist als Mutter ausgebildet, die auf ein Gewinde der Kolbenstange aufgesetzt und dort verdrehbar ist. Über das Verdrehen der Mutter wird stufenlos die Vorspannkraft des Reibgliedes aus Elastomer-Werkstoff eingestellt. Mit dieser Ausführungsform ist zwar eine sehr große Reibfläche erzielbar, andererseits ist eine Einstellung der Reibkraft bzw. der Vorspannkraft auf das Reibglied nur dann möglich, wenn zuvor die gesamte Vorrichtung mindestens einseitig von der Gabel oder dem Fahrgestell gelöst worden ist. Dieses Lösen ist für eine genaue Einstellung der Reibkraft hinderlich, denn nach einer Verstellung der Vorspannkraft muß erst das einseitig gelöste Lager der Vorrichtung wieder montiert werden, so daß eine Prüfung der Einstellung der Reibkraft mit Hilfe des Gewichtes der Zuggabel möglich ist. Ist die Einstellung nicht zufriedenstellend gewählt worden, ist eine Nachstellung nur dann möglich, wenn wiederum das Lager der Vorrichtung einseitig gelöst worden ist.

Die DE-B-1 215 005 zeigt eine Ausführungsform, bei der zwar ein Verstellkörper vorgesehen ist, andererseits die Klemmkraft jedoch nicht ver- oder einstellbar ist. Es ist lediglich die Möglichkeit geschaffen, die Vorspannkraft von dem Reibglied gänzlich wegzunehmen. Dies ist auch in montiertem Zustand möglich.

Die DE-A-1 630 219 zeigt eine Antischleudervorrichtung für die Verbindung zwischen Kraftfahrzeug und Wohnwagen, bei der an zwei teleskopisch ineinander geführten Verbindungselementen eine Reibkraft wirksam wird. Dabei wird ein Reibbelag gegen eine Reibfläche des einen Verbindungselementes angedrückt. Die Andruckkraft kann feinfühlig über eine Stellschraube und eine dazwischengeschaltete Feder variiert werden. Die Aufbringung der Vorspannkraft erfolgt hier rein radial auf den weitgehend unnachgiebigen Reibbelag.

Der Erfindung liegt dieAufgabe zugrunde, ein Haltegestänge der eingangs beschriebenen Art derart weiterzubilden, daß eine Verstellung der Reibkraft nicht nur ohne Demontage des Haltegestänges, sondern zudem noch feinfühlig und in Anpassung an das Gewicht der Zuggabel jederzeit durchführbar ist, so daß erforderlichenfalls auch ein Nachjustieren mühelos möglich ist.

Erfindungsgemäß wird dies dadurch erreicht, daß das Reibglied aus Elastomer-Werkstoff gefertigt ist, und daß ein Teil des Reibgliedes als ein in axialer Richtung vorspannbares Federelement ausgebildet ist. Die Anpreßkraft auf das Reibglied aus Elastomer-Werkstoff wird also in axialer Richtung aufgebracht, während die Reibkraft radial zwischen den Verbindungselementen wirkt. Damit ergibt sich vorteilhaft die sofortige Nachprüfungsmöglichkeit bzw. Nachstellmöglichkeit der Reibkraft, ohne daß es erforderlich ist, ein Lager des Haltegestänges zuvor zu lösen. Die Reibkraft kann damit besonders genau eingestellt werden. Ein weiterer Vorteil des Haltegestänges ist darin zu sehen, daß eine Typenvereinfachung geschaffen wird. Es ist ohne weiteres möglich, einen Bautyp für eine Reihe von Zuggabeln einzusetzen und jeweils nach der Montage am Anhänger lediglich die abgestimmte Vorspannkraft bzw. Reibkraft einzustellen und anzupassen.

Das aus Elastomer-Werkstoff bestehende Reibglied muß nicht unbedingt selbst als in axialer Richtung vorspannbares Federelement ausgebildet sein. In einem solchen Falle ergibt sich zwar eine besonders kurze Bauweise. Es ist jedoch auch möglich, das eine Teil des Reibgliedes als getrennte Vorspannfeder auszubilden, die zwischen dem Reibglied und dem Ende des ersten Verbindungselementes angeordnet ist. Durch eine solche getrennte Vorspannfeder ist es möglich, die axiale Vorspannkraft in einem größeren Bereich zu variieren. Das Reibglied selbst kann in bekannter Weise aus zellular aufgebautem Elastomer-Werkstoff bestehen, der auch zusätzlich zu der getrennten Vorspannfeder noch eine Zusammendrückung und damit Anpassung ermöglicht.

Die Erfindung wird anhand einiger Ausführungsbeispiele weiter beschrieben, und zwar zeigt

Fig. 1 einen Querschnitt durch die wesentlichen Teile des Haltegestänges in einer ersten Ausführungsform,

Fig. 2 einen Querschnitt durch das Haltegestänge in einer zweiten Ausführungsform und

Fig. 3 einen Querschnitt durch das Haltegestänge in vollständiger Darstellung bei einer dritten Ausführungsform.

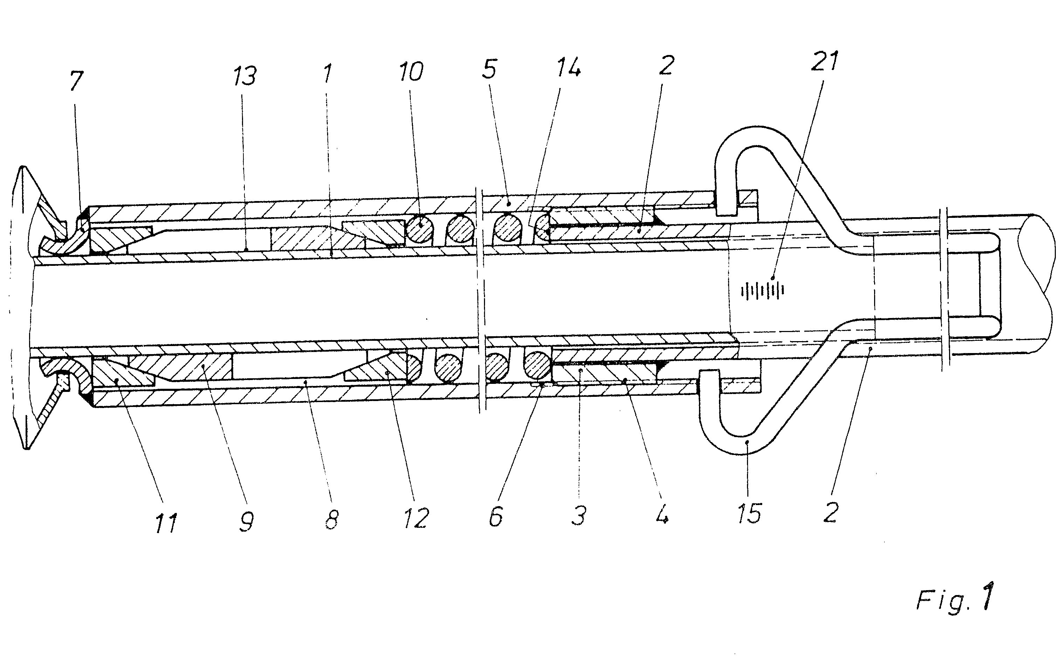

Das Haltegestänge gemäß Fig. 1 weist als Hauptbestandteile Verbindungselemente 1, 2 auf, die hier beide als Rohre ausgebildet sind und teleskopartig ineinander geführt sind. Das innere Verbindungselement 1 besitzt hier den kleineren Durchmesser. Die freien, in Fig. 1 nicht dargestellten Enden der Verbindungselemente 1 und 2 sind jeweils mit einem Gabelauge o. dgl. versehen und dienen der Anlenkung der Vorrichtung am Fahrgestell und an der Zuggabel des Anhängers.

Mit dem äußeren Verbindungselement 2 ist ein Gewindering 3 verschweißt, der auf seiner Außenseite ein Gewinde 4 trägt. Das Gewinde 4 könnte auch direkt auf den Außenumfang oder einen Absatz des Verbindungselementes 2 aufgebracht sein. Es ist ein Verstellkörper 5 in Form eines Rohrstückes vorgesehen, der auf einem Teil seines inneren Umfanges ein Gegengewinde 6 korrespondierend zu dem Gewinde 4 trägt. Der Verstellkörper 5 besitzt an seinem anderen Ende einen Anschlag 7 und umgreift das innere Verbindungselement 1 lose und verschiebbar. Wie ersichtlich, ragt der Verstellkörper 5 über das freie Ende des Verbindungselementes 2 hinaus, so daß in ihm ein Freiraum 8 für die Unterbringung eines Reibgliedes 9 und einer Vorspannfeder 10 geschaffen ist. Das Reibglied 9 besteht aus Elastomer-Werkstoff und ist an beiden Enden in axialer Richtung je dreifach versetzt geschlitzt. Es besitzt auf seiner Außenseite konische Flächen, die mit Anstellringen 11 und 12 zusammenarbeiten. Auf dem inneren Umfang liegt das Reibglied 9 auf dem äußeren Umfang des inneren Verbindungselementes 1 auf und bildet dort eine Reibfläche 13. Das Reibglied 9 kann selbst federnd-nachgiebig ausgebildet sein oder aber auch aus hartem selbst nicht nachgiebigen Kunststoff bestehen. Das freie Ende des äußeren Verbindungselementes 2 ist als Anschlag 14 ausgebildet, der mit dem Anschlag 7 zusammenarbeitet, wobei zwischen diesen beiden Anschlägen 7 und 14 das Reibglied 9 und die Vorspannfeder 10 sowie noch die beiden Anstellringe 11 und 12 gelagert sind. Es ist ersichtlich, daß die Entfernung zwischen den Anschlägen 7 und 14 durch ein Verdrehen des Verstellkörpers 5 relativ zu dem äußeren Verbindungselement 2 verändert werden kann. Auf diese Art und Weise wird die Vorspannung der Vorspannfeder 10 verändert, was sich letztlich über die Anstellringe 11 und 12 auf die Anpreßkraft des Reibgliedes 9 in der Reibfläche 13 und damit auf die Reibkraft auswirkt. Es wird also die Reibkraft eingestellt. Zu diesem Einstellen bzw. Verdrehen dient ein federnder Handgriff 15, der die aus Fig. 1 ersichtliche Form und die versetzte Lagerung besitzt, so daß er üblicherweise an dem äußeren Verbindungselement 2 anliegt. Durch Verschwenken des Handgriffes um 90° wird ein Hebelarm gebildet, mit Hilfe dessen der Verstellkörper 5 relativ zu dem äußeren Verbindungselement 2 verdreht werden kann.

Die Montage der Höheneinstellvorrichtung geschieht in der Weise, daß die Einrichtung an den Lagern zwischen Fahrgestell und Zugdeichsel fertig befestigt bzw. montiert wird. Durch Verdrehen des Verstellkörpers 5, der von außen frei zugänglich ist, ohne daß ein Lager gelöst werden müßte, kann die Reibkraft in der Reibfläche 13 stufenlos und leicht sehr genau an das Gewicht der Zuggabel angepaßt werden, so daß es möglich ist, letztlich die Zuggabel mit geringem Kraftaufwand in die eine oder andere Höhenlage zu bringen. Dies ist besonders dann der Fall, wenn die Zuggabel zusätzlich noch einen Gewichtsausgleich in Form von Federn od. dgl. besitzt.

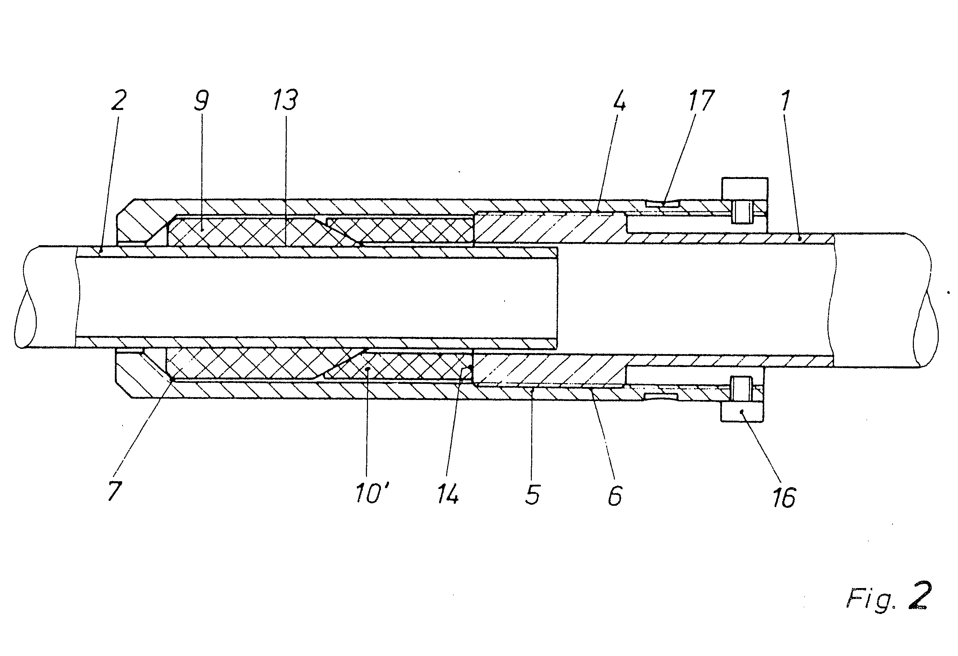

Die Ausführungsform gemäß Fig. 2 unterscheidet sich von derjenigen gemäß Fig. 1 zunächst dadurch, daß der Verstellkörper 5 hier auf dem inneren Verbindungselement 1 verdrehbar angeordnet ist, so daß die Reibfläche 13 des Reibgliedes 9 hier logischerweise mit dem äußeren Umfang des Verbindungselementes 2 zusammenarbeiten muß. Das Reibglied 9 kann hier aus einem überwiegend nicht-federnd nachgiebigen Elastomer-Werkstoff bestehen. Die Vorspannfeder 10 ist hier durch einen vorspannbaren Gummikörper 10' ersetzt, der zur Aufbringung der Vorspannkraft dient. Es ist hier eine Schraube 16 an dem Verstellkörper 5 angeordnet, die verhindert, daß man bei eingesetzter Schraube 16 den Verstellkörper 5 vollständig von dem inneren Verbindungselement 1 abschrauben kann. Zwecks Verdrehung des Verstellkörpers 5 besitzt dieser außen ein oder mehrere Löcher 17, die dem Einsatz eines Spezialwerkzeuges dienen. Statt dessen kann auch eine Schlüsselfläche angeordnet sein. Auch hier ist ersichtlich, daß durch ein relatives Verdrehen des Verstellkörpers 5 zu dem inneren Verbindungselement 1 die Vorspannung im Gummikörper 10' geändert wird, so daß letztlich eine unterschiedliche Anpreßkraft in der Reibfläche 13 und damit eine unterschiedliche Reibkraft resultieren.

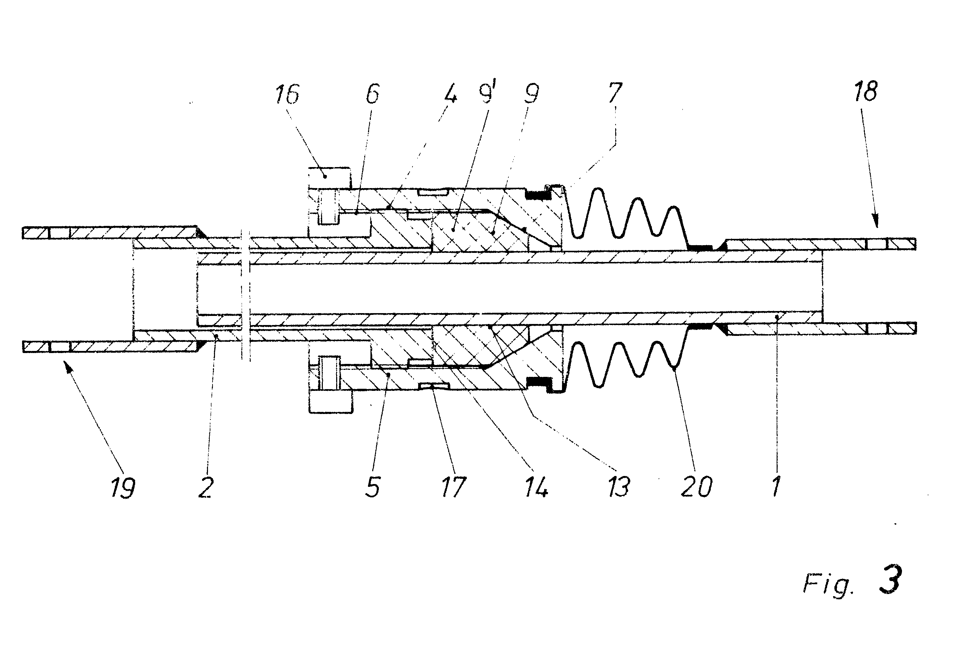

In Fig. 3 ist die einfachste Ausführungsform der Höheneinstellvorrichtung dargestellt. Mit dem freien Ende des inneren Verbindungselementes 1 ist ein Gabelauge 18 verbunden. Das äußere Verbindungselement 2 trägt ein Gabelauge 19. Das Reibglied 9 besteht hier selbst aus federnd nachgiebigem Elastomer-Werkstoff und besitzt einen zylindrischen Teil 9', so daß es geeignet ist, gleichzeitig die axial wirkende Vorspannkraft aufzunehmen. Hierdurch ergibt sich eine besonders kurze Bauweise des Verstellkörpers 5. Ein Faltenbalg 20 schützt den äußeren Umfang des inneren Verbindungselementes 1 und damit die Gegenfläche zu der Reibfläche 13.

Gemeinsames Merkmal sämtlicher Ausführungsformen ist, daß der Verstellkörper 5 von außen zugänglich ist und gegenüber dem inneren Verbindungselement 1 oder dem Verbindungselement 2 verdrehbar angeordnet ist. Der Verstellkörper 5 schließt auf jeden Fall das Reibglied 9 sowie das jeweils andere Verbindungselement 2 bzw. 1 ein.

**Patentansprüche**

1. Haltegestänge zum stufenlosen Feststellen der Höhe von Zuggabeln an Anhängern, wobei

a) das Gestänge aus zwei ineinander geführten Verbindungselementen (1, 2), wie Kolbenstange und Rohr bzw. Rohre, besteht, die zwischen dem Fahrgestell des Anhängers und der Zuggabel eingeschaltet sind,

b) zwischen den beiden Verbindungselementen ein Verstellkörper (5) vorgesehen ist,

c) der Verstellkörper an einer Seite mit dem ersten Verbindungselement (2) über ein Gewinde (4, 6) verbunden ist, so daß bei Verdrehung des Verstellkörpers (5) eine stufenlose axiale Verstellung des Verstellkörpers gegenüber dem ersten Verbindungselement erfolgt,

d) in dem Verstellkörper an der anderen Seite mit zur Achse des Gestänges schrägen Lagerflächen (7) ein Reibglied (9) gelagert ist, das das zweite Verbindungselement (1) umfaßt,

e) das Reibglied auf der von den Lagerflächen abgewandten Seite von einer axialen Kraft beaufschlagt wird, die sich am ersten Verbindungselement abstützt,

dadurch gekennzeichnet, daß das Reibglied (9) aus Elastomer-Werkstoff gefertigt ist und daß ein Teil (9') des Reibgliedes als ein in axialer Richtung vorspannbares Federelement ausgebildet ist.

2. Haltegestänge nach Anspruch 1, dadurch gekennzeichnet, daß das Teil (9') als getrennte Vorspannfeder (10, 10') ausgebildet ist, die zwischen dem Reibglied (9) und dem Ende des ersten Verbindungselementes angeordnet ist.

3. Vorrichtung nach einem der Ansprüche 1 und 2, dadurch gekennzeichnet, daß der Verstellkörper (5) außen mit einer Schlüsselfläche, einem Loch (17) od. dgl. zum Ansetzen eines Einstellwerkzeuges ausgestattet ist.

4. Vorrichtung nach Anspruch 3, dadurch gekennzeichnet, daß der Verstellkörper (5) ein Einstellwerkzeug mit einem Handgriff (15) aufweist.

5. Vorrichtung nach Anspruch 1 bis 4, dadurch gekennzeichnet, daß der Verstellkörper (5) auf dem mit größerem Durchmesser ausgestatteten Verbindungselement (2) mittels des Gewindes (4, 6) gelagert ist und das freie Ende dieses Verbindungselementes (2) übergreift, wobei in dem dadurch gebildeten Freiraum das Reibglied (9) untergebracht ist.

6. Vorrichtung nach Anspruch 1 bis 5, dadurch gekennzeichnet, daß eine Sicherung (15, 16) gegen völliges Lösen des Verstellkörpers (5) beim Verdrehen auf dem zugehörigen Gewinde (4) des Verbindungselementes (2 bzw. 1) vorgesehen ist.

7. Vorrichtung nach Anspruch 1 bis 6, dadurch gekennzeichnet, daß auf dem Verbindungselement (1 bzw. 2), auf dem der Verstellkörper (5) aufgeschraubt ist, eine Skala (21) zur Anzeige der Vorspannkraft vorgesehen ist.

8. Vorrichtung nach Anspruch 5, dadurch gekennzeichnet, daß als Verdrehsicherung in den Gewinden (4, 6) geteilte, sich gegen die Innenwand des Verstellkörpers (5) anlegende Stellringe (1, 12) vorgesehen sind.

9. Vorrichtung nach Anspruch 4, dadurch gekennzeichnet, daß der Handgriff (15) in gegeneinander axial versetzten Löchern am Verstellkörper (5) schwenkbar gelagert ist.

**Claims**

1. Restraining link arrangement for setting the height of a forked trailer-drawbar, in a manner permitting infinitely variable adjustment:

a) the link arrangement comprising two connecting elements (1, 2), one being guided inside the other, such as a piston rod and a tube, or such as tubes, as appropriate, which are interposed between the trailer chassis and the forked drawbar;

b) an adjusting member (5) being provided between the two connecting elements;

c) the adjusting member being connected, on one side, to the first connecting element (2) by means of a thread (4, 6), so that the adjusting member (5), on being twisted, is axially shifted, in a manner permitting infinitely-variable adjustment, relative to the first connecting element;

d) a friction element (9) being mounted in the adjusting member, on the other side, this friction element (9) surrounding the second connecting element (1) and possessing bearing surfaces (7) which are inclined with respect to the axis of the link arrangement;

e) an axial force being applied to that side of the friction element which faces away from the bearing surfaces, that side being supported on the first connecting element,

characterised in that the friction element (9) is manufactured from an elastomeric material and in that a portion (9') of the friction element is configured as a spring element which can be preloaded in the axial direction.

2. Restraining link arrangement according to Claim 1, characterised in that the portion (9') is configured as a separate preloading spring (10, 10'), which is located between the friction element (9) and the end of the first connecting element.

3. Arrangement according to Claim 1 or 2, characterised in that the adjusting member (5) is furnished, on its outside, with an area on which a wrench can be fitted, a hole (17), or a similar feature for the purpose of fitting on an adjusting tool.

4. Arrangement according to Claim 3, characterised in that the adjusting member (5) possesses an adjusting tool which has a handle (15).

5. Arrangement according to Claim 1 to 4, characterised in that the adjusting member (5) is mounted, by means of the thread (4, 6), on that connecting element (2) which is endowed with the larger diameter, and extends over the free end of this connecting element (2), the friction element (9) being accommodated in the unobstructed space which is thereby formed.

6. Arrangement according to Claims 1 to 5, characterised in that a safety device (15, 16) is provided, in order to prevent the complete detachment of the adjusting member (5) as it is being twisted on the associated thread (4) of the connecting element (2 or 1, as the case may be).

7. Arrangement according to Claims 1 to 6, characterised in that a scale (21) for indicating the preload force is provided on the connecting element (1 or 2, as the case may be), on which the adjusting member (5) is screw-fitted.

8. Arrangement according to Claim 5, characterised in that, to guard against undesired twisting at the threads (4, 6), split tightening rings (11, 12) are provided, which bear against the inner wall of the adjusting member (5).

9. Arrangement according to Claim 4, characterised in that the handle (15) is mounted, in a manner permitting pivoting, in holes on the adjusting member (5), these holes being axially offset in relation to one another.

**Revendications**

1. Timonerie de maintien pour déterminer progressivement la hauteur de flèches d'attelage de remorques, dans laquelle:

a) la timonerie est composée de deux éléments de liaison télescopiques (1, 2) entre eux, tels qu'une tige de piston et un tube et/ou des tubes, qui sont intercalés entre le châssis du véhicule de la remorque et la flèche d'attelage;

b) entre les deux éléments de liaison il est prévu un corps de réglage (5);

c) le corps de réglage est relié d'un côté au premier élément de liaison (2) par un filetage (4, 6), de sorte que, lorsque le corps de réglage (5) tourne, on obtient un déplacement axial progressif du corps de réglage par rapport au premier élément de liaison;

d) dans le corps de réglage, de l'autre côté de celui-ci, il est logé un organe de frottement (9) comportant des surfaces d'appui (7) inclinées par rapport à l'axe de la timonerie et entourant le deuxième élément de liaison (1);

e) sur le côté opposé aux surfaces d'appui, l'organe de frottement est soumis à une force axiale s'appuyant sur le premier élément de liaison;

caractérisée en ce que l'organe de frottement (9) est en élastomère et qu'une pièce (9') de l'organe de frottement est un élément élastique, pouvant être préchargé axialement.

2. Timonerie suivant la revendication 1, caractérisée en ce que la pièce (9') est un ressort de précharge (10, 10') séparé, placé entre l'organe de frottement (9) et l'extrémité du premier élément de liaison.

3. Dispositif suivant une quelconque des revendications 1 et 2, caractérisé en ce que le corps de réglage (5) est mui extérieurement d'une surface recevant une clé, d'un trou (17) ou d'une surface usinée analogue recevant un outil de réglage.

4. Dispositif suivant la revendication 3, caractérisé en ce que le corps de réglage (5) comporte un outil de réglage avec une poignée (15).

5. Dispositif suivant les revendications 1 à 4, caractérisé en ce que le corps de réglage (5) est monté, au moyen du filetage (4, 6) sur l'élément de liaison (2) qui a le plus grand diamètre et qu'il dépasse, en l'entourant, l'extrémité libre de cet élément de liaison (2), de sorte que l'organe de frottement (9) est logé dans l'espace libre ainsi créé.

6. Dispositif suivant les revendications 1 à 5, caractérisé en ce qu'il est prévu une sécurité (15, 16) contre un desserrage complet du corps de réglage (5), quand on le tourne sur le filetage correspondant (4) de l'élément de liaison (2 ou 1).

7. Dispositif suivant les revendications 1 à 6, caractérisé en ce que, sur l'élément de liaison (1 ou 2), sur lequel le corps de réglage (5) est vissé, il est prévu une graduation (21) indiquant la précharge.

8. Dispositif suivant la revendication 5, caractérisé en ce que, comme sécurité contre la torsion dans les filetages (4, 6), on prévoit des bagues d'appui (11, 12) divisées, qui s'appuient contre la paroi intérieure du corps de réglage (5).

9. Dispositif suivant la revendication 4, caractérisé en ce que la poignée (15) pivote dans des trous pratiqués sur le corps de réglage (5) et décalés axialement entre eux.

0 030 711

Fig. 1

Fig. 2

0 030 711

Fig. 3